# EUROPEAN PATENT APPLICATION

(11) **EP 0 712 902 A1**
(43) Date of publication of application: **22.05.1996**
(21) Application number: 94118263.6
(22) Date of filing: 19.11.1994
(51) Int. Cl.: C08L 71/12, C08L 53/02, H01J 29/76, C08K 3/00, C08K 5/00

(54) **Polymer mixture comprising a polyphenylene ether and a hydrogenated diene-vinylaromatic block copolymer; objects formed thereof**

(71) Applicant: GENERAL ELECTRIC COMPANY, Schenectady, NY 12345 (US)
(72) Inventor: Damen, Catharina Maria Elisabeth, NL-4600 AC Bergen op Zoom (NL); Hellemons, Johannes Maria, NL-4600 AC Bergen op Zoom (NL); Grimmelt, Ferdinand Gerardus Franciscus, NL-4600 AC Bergen op Zoom (NL); Timmermans, Henricus Cornelis Maria, NL-4600 AC Bergen op Zoom (NL)
(74) Representative: Grever, Frederik

(57) **Abstract**

The invention relates to polymer mixtures comprising
A. a polyphenylene ether,
B. a hydrogenated diene-vinylaromatic block copolymer and eventually
C. further constituents with the exception of styrene homopolymers and rubber modified polystyrenes.

The polymer mixture according to the invention are particularly suitable for applications were good ageing properties are required.

## Description

The invention relates to polymer mixtures comprising
A. a polyphenylene ether,
B. a hydrogenated diene-vinylaromatic block copolymer and eventually
C. further constituents with the exception of styrene homopolymers and rubber modified polystyrenes.

The invention further relates to objects made out of the polymer mixture of the invention, in particular the support structure for deflection yokes in TV sets.

Polymer mixtures comprising a polyphenylene ether and a hydrogenated block copolymer are known from US-A-4,167,507. Said known polymer mixtures comprise a hydrogenated triblock copolymer . The known polymer mixtures may further comprise styrene homopolymers or rubber modified polystyrenes. In the examples of US-A-4,167,507 is demonstrated that the ageing properties of the polymer mixtures are improved by using instead of a rubber modified polystyrene the combination of a hydrogenated triblock copolymer and crystal clear polystyrene.

It has now been found that the ageing properties of polymer mixtures of the kind as claimed can be further improved by not incorporating styrene homopolymers or rubber modified polystyrenes in them.

The polymer mixtures of the invention can however comprise all kinds of usual constituents and additives with the exception of the aforementioned styrene homopolymers and rubber modified polystyrenes.

### Detailed description of the invention.

The polymer mixture according to the invention does comprise in any case the following two constituents:
A a polyphenylene ether and
B a hydrogenated block copolymer.
The polymer mixture may further comprise:
C usual constituents with the exception of styrene homopolymers and rubber modified polystyrenes.

### A. POLYPHENYLENE ETHER

Polyphenylene ether is commonly abbreviated as PPE. The PPE employed in the present invention are known polymers comprising a plurality of structural units of the formula (I) 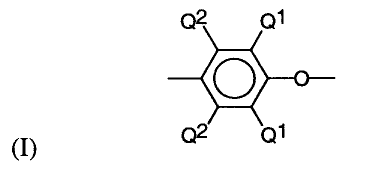
wherein in each structural unit independently, each Q¹ is independently halogen, primary or secondary lower alkyl (i.e., alkyl containing up to 7 carbon atoms), phenyl, haloalkyl, aminoalkyl, hydrocarbonoxy, or halohydrocarbonoxy wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined for Q¹. Most often, each Q¹ is alkyl or phenyl, especially C₁₋₄ alkyl, and each Q² is hydrogen.

Both homopolymer and copolymer PPE are included. The preferred homopolymers are those containing 2,6-dimethyl-1,4-phenylene ether units. Suitable copolymers include random copolymers containing, for example, such units in combination with 2,3,6-trimethyl-1,4-phenylene ether units. Also included are PPE containing moieties prepared by grafting vinyl monomers or polymers such as polystyrenes and elastomers, as well as coupled PPE in which coupling agents such as low molecular weight polycarbonates, quinines, heterocycles and formals undergo reaction in known manner with the hydroxy groups of two PPE chains to produce a higher molecular weight polymer, provided a substantial proportion of free OH groups remains.

The PPE generally has a number average monocular weight within the range of about 3,000-40,000 and a weight average molecular weight within the range of about 20,000-80,000, as determined by gel permeation chromatography. Its intrinsic viscosity is most often in the range of about 0.15-0.6 dl/g, as measured in chloroform at 25°C.; for some applications of the polymer mixture of the invention where good flow properties are required it is preferred to use a PPE with an intrinsic viscosity of less than 0.40 dl/g, preferably in a range of 0.26 - 0.34 dl/g.

The PPE are typically prepared by the oxidative coupling of at least one monohydroxyaromatic compound such as 2,6-xylenol or 2,3,6-trimethylphenol. Catalyst systems are generally employed for such coupling; they typically contain at least one heavy metal compound such as a copper, manganese or cobalt compound, usually in combination with various other materials.

Particularly useful PPE for many purposes are those which comprise molecules having at least one aminoalkyl-containing end group. The aminoalkyl radical is typically located in an ortho position to the hydroxy group. Products containing such end groups may be obtained by incorporating an appropriate primary or secondary monoamine such as di-n-butylamine or dimethylamine as one of the constituents of the oxidative coupling reaction mixture. Also frequently present are 4-hydroxybiphenyl end groups, typically obtained from reaction mixtures in which a by-product diphenoquinone is present, especially in a copper-halide-secondary or tertiary amine system. A substantial proportion of the polymer molecules, typically constituting as much as about 90% by weight of the polymer, may contain at least one of said aminoalkyl-containing and 4-hydroxybiphenyl end groups.

It will be apparent to those skilled in the art from the foregoing that the polyphenylene ethers contemplated for use in the present invention include all those presently known, irrespective of variations in structural units or ancillary chemical features.

### B. HYDROGENATED BLOCK COPOLYMER

Hydrogenated block copolymers are known products. They are commercially available. All known hydrogenated block copolymers can be used in the polymer mixture of the invention. Suitable block copolymers include the hydrogenated diblock copolymers and the hydrogenated triblock copolymers.

Particularly suitable are hydrogenated block copolymer's of the type A-B-A, wherein prior to hydrogenation each A is a polymerized vinylaromatic block having a molecular weight of about 4,000 to 115,000 and B is a polymerized conjugated hydrocarbon block having an average molecular weight of about 20,000 to 450,000. Still more preferably, the terminal blocks have average molecular weights of 8,000-60,000 while the polybutadiene polymer block has an average molecular weight between 50,000 and 300,000. The terminal blocks will preferably comprise 2-33% by weight, or more preferably, 5-30% by weight of the total block polymer. After the hydrogenation the unsaturation of block B has been reduced to less than 30 % preferably less than 10% of the original unsaturation. Most preferred are block copolymers with a block B which is 100% or almost 100% hydrogenated. Both A blocks can be the same or can be different with respect to their chemical composition or with respect to their molecular weight.

Particularly preferred are the A-B-A hydrogenated triblock copolymers as described in US 3,431,323. Prior to hydrogenation, the end blocks of these copolymers comprise homopolymers or copolymers prepared from vinyl aromatic hydrocarbons wherein the aromatic moiety may be either monocyclic or polycyclic. Typical monomers include styrene, alpha methyl styrene, vinyl xylene, ethyl vinyl xylene, vinyl naphthalene and the like or mixtures thereof. The end blocks may be the same or different. The center block may be derived from, for example, poly I soprene or polybutadiene.

The block copolymers are formed by techniques well known to those skilled in the art. Hydrogenation may be conducted utilizing a variety of hydrogenation catalysts such as nickel or kieselguhr, Raney nickel, copper chormate, molybdenum sulfide and finely divided platinum or other noble metals on a low surface area carrier.

Hydrogenation may be conducted at any desired temperature or pressure, from atmospheric to about 20 MPa at temperatures from 19°C and higher for times between 0.1 and 24 hours, preferably from 0.2-8 hours.

### C. FURTHER CONSITUENTS

The polymer mixture according to the invention can comprise in addition to the aforementioned constituents A and B further constituents are commonly used in polymer mixtures comprising PPE, with exception of styrene homopolymers and rubber modified polystyrenes.

Particularly suitable are the following additional constituents: reinforcing fibers, fillers, flame retardants, plasticisers and stabilizers.

Preferred reinforcing fibers are glass fibers; suitable fillers are mica flakes. A combination of glass fibers and mica flakes offers advantages for certain applications. As flame retardants can be used all common flame retardants as used for polymer mixtures comprising polyphenylene ether. Particularly suitable are phosphate based compounds. Most of the commonly used phosphates have a plasticising effect.

Polymer mixtures comprising a polyphenylene ether, reinforcing fibers and a polyethyl oxazoline binder with good ageing properties are known from US 5,019,616. The known compositions may further comprise polystyrenes, clay, mica, talc and a flame retardant.

In a preferred composition according to the invention the polymer mixture comprises 88 to 96 parts by weight of constituent A and 12 to 4 parts by weight of constituent B, as calculated per 100 parts by weight of A plus B.

Polymer mixtures according to the invention are particularly suitable for the manufacture of the support member of the deflection yoke for TV sets. For this purpose are more particularly preferred polymer mixtures which comprise as constituent C a combination of the following : glass fibers (in a quantity of 5 to 20 parts by weight), mica flakes (in a quantity of 5 to 20 parts by weight), an organic phosphate based flame retardant compound (in a quantity of 10 to 30 parts by weight). It is further preferred to add usual stabilisers such as organic phosphites, zincsulfide and magnesium oxide (in a total quantity of 0.5 to 2.0 parts by weight). All quantities for constituent C are indicated here above as the quantity per 100 parts by weight of A plus B.

### Example I and comparative example A

Two different polymer mixtures were prepared while using the following ingredients:
- PPE :: a poly (2,6-dimethylphenylene-1,4-ether) with an intrinsic viscosity of approximately 0.3 dl/g measured at 25°C in chloroform.
- cc PS:: a styrene homopolymer with a weight average molecular weight of about 260.000.
- SEBS:: a hydrogenated styrene-butadiene-styrene triblock copolymer . The molecular weight of the styrene blocks is about 18.000; the molecular weight of the hydrogenated butadiene block is about 80.000. The total styrene content by weight is about 31%.
- Glass:: glass fibers with a average length of about 4,5 mm and a diameter of 14 micrometer,
- Mica:: mica flakes
- RDP:: Resorcinol bis(diphenyl phosphate) and higher oligomers in a ratio by weight of about 65:35.
- MgO:: magnesium oxide
- ZnS:: zinc sulfide
- Ph:: a blend of tris nonyl phenyl phosphite & diphenyl decyl phosphite.

The above mentioned constituents were compounded in a Werner Pfleiderer twin screw extruder. The average temperature setting was 280 degrees Centigrade. The compounded polymer mixtures were extruded and pelletized. From the pellets were molded test specimen for the determination of the following properties: Vicat (according to ISO 306, method B at a heating rate of 120°C/h); the melt viscosity (according to DIN 54811, at 280°C and 1500 per sec); the Izod notched impact strength (according to ISO 180, method 1A at room temperature) and the tensile strength (in accordance with ISO 527, at a cross head speed of 5mm/min).

The tensile strength was determined both; once before ageing of the test bars and after several ageing intervals up to 3600 hours in an circulating air oven at 130 degrees Centigrade. The retention of the tensile strength after 3600 hours ageing was calculated as a percentage of the original tensile strength.

The used quantities and the measured properties are incorporated in the following table (Table A).

**TABLE A**

| **Example** | **A** | **I** |
|---|---|---|
| Composition (parts by weight) | | |
| PPE | 60.4 | 60.4 |
| ccPS | 4 | -- |
| SEBS | 5 | 5 |
| Glass | 10 | 10 |
| Mica | 10 | 10 |
| RDP | 10 | 14 |
| MgO | 0.6 | 0.6 |
| ZnS | | |
| Ph | | |

| Properties | | |
|---|---|---|
| Vicat B/120 (°C) | 151 | 141 |
| Melt viscosity (1500s⁻¹)(Pa.s) | 300 | 222 |
| Izod Notched impact (kJ/m²) | 23 | 26 |
| Retention tensile strength (%) | 89 | 97 |

As can be seen from the results of the table the absence of the styrene homopolymer ( cc PS) in composition of example I results in an improvement of the ageing properties (compare with composition of example A). The examples of US 4,167,507 (in particular example A) had already demonstrated that the replacement of a rubber modified polystyrene by the combination of a styrene homopolymer and a partially hydrogenated block copolymer results in an improvement of the ageing properties. With the polymer mixture of the invention a further improvement of the ageing property has been obtained by leaving out the styrene homopolymer also.

All patents mentioned herein are incorporated herein by reference.

## Claims

1. Polymer mixture comprising
A. a polyphenylene ether,
B. a hydrogenated diene-vinylaromatic block copolymer and eventually
C. further constituents with the exception of styrene homopolymers and rubber modified polystyrenes.

2. Polymer mixture of claim 1, wherein the mixtures comprises per 100 parts by weight of A plus B:
88-96 parts by weight of A and 12-4 parts by weight of B.

3. Polymer mixture of claim 1, wherein the polyphenylene ether has an intrinsic viscosity, measured at 25°C in chloroform of less than 0.40 dl/g.

4. Polymer mixture of claim 1, wherein the polymer mixture comprises as constituent C one or more of the following: reinforcing fibers, fillers, flame retardants, plasticisers, stabilizers.

5. Polymer mixture of claim 1, wherein the mixture comprises as constituent C glass fibers.

6. Polymer mixture of claim 1, wherein the mixture comprises as constituent C mica flakes.

7. Polymer mixture of claim 1, wherein the mixture comprises as constituent C a phosphate compound.

8. Objects made out of polymer mixture of claim 1.

9. Television deflection yoke with a support member made out of the polymer mixture of claim 1.
